(19) Europäisches Patentamt
European Patent Office
Office européen des brevets

(11) **EP 2 462 066 B1**

(12) **FASCICULE DE BREVET EUROPEEN**

(45) Date de publication et mention
de la délivrance du brevet:
**14.12.2016 Bulletin 2016/50**

(21) Numéro de dépôt: **10748149.1**

(22) Date de dépôt: **04.08.2010**

(51) Int Cl.:
*C03B 3/02* <sup>(2006.01)</sup>     *C03B 5/04* <sup>(2006.01)</sup>
*C03B 5/235* <sup>(2006.01)</sup>

(86) Numéro de dépôt international:
**PCT/IB2010/053526**

(87) Numéro de publication internationale:
**WO 2011/015994 (10.02.2011 Gazette 2011/06)**

(54) **FOUR DE FUSION DE MATIÈRES PREMIÈRES VITRIFIABLES AVEC ZONE DE PRÉCHAUFFAGE OPTIMISÉE**

OFEN ZUM SCHMELZEN VON ROHGEMENGEN MIT OPTIMIERTEM VORHEIZBEREICH

FURNACE FOR MELTING BATCH RAW MATERIALS WITH OPTIMIZED PREHEATING ZONE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **07.08.2009 FR 0903898**

(43) Date de publication de la demande:
**13.06.2012 Bulletin 2012/24**

(73) Titulaire: **Fives Stein**
**94701 Maisons-Alfort Cedex (FR)**

(72) Inventeurs:
• **KUHN, Wolf Stefan**
**F-91540 Fontenay Le Vicomte (FR)**
• **TABLOUL, Samir**
**F-92120 Montrouge (FR)**
• **STROCK, Bertrand**
**F-91540 Mennecy (FR)**
• **PANARD, Gérard**
**F-91800 Brunoy (FR)**

(74) Mandataire: **Cabinet Armengaud Aîné**
**16, rue Gaillon**
**75002 Paris (FR)**

(56) Documents cités:
**EP-A1- 0 808 806     BE-A- 428 373**
**FR-A1- 2 711 981**

• **DATABASE WPI Week 197821 1 janvier 1978 (1978-01-01) Thomson Scientific, London, GB; AN 1978-37993A XP002573808 -& SU 563 363 A1 (KUTASEVICH) 30 juin 1977 (1977-06-30)**

## Description

L'invention est relative à un four de chauffage et/ou de fusion de matières, du genre de ceux qui comprennent :

- une cuve recouverte par une voûte, contenant un bain de matières en fusion,
- une zone de combustion munie de moyens de chauffage, notamment de brûleurs,
- au moins une entrée située en amont du four pour l'enfournement des matières à chauffer,
- au moins une zone de récupération d'énergie entre l'entrée et la zone de combustion dans laquelle circulent majoritairement les fumées de combustion,
- au moins une sortie en aval pour les matières chauffées ou fondues,
- au moins une ouverture d'évacuation des fumées prévue en amont de la zone de récupération.

L'invention concerne plus particulièrement un four de chauffage et/ou de fusion pour des matières vitrifiables, dont l'équipement de chauffage est au moins partiellement à oxy-combustion, la cuve contenant alors un bain de matières en fusion lorsque le four fonctionne. Dans un tel four, les matières à vitrifier introduites en entrée forment un tapis qui flotte sur le bain et qui entre progressivement en fusion.

L'invention concerne de préférence des fours à oxy-combustion et les fours mixtes, c'est-à-dire partiellement à oxy-combustion.

Dans le cas d'un four mixte, il est avantageux d'utiliser les fumées de la section à oxy-combustion pour le préchauffage des matières premières.

FR 1 256 831 divulgue un four de fusion de matières vitrifiables à aéro-combustion. La récupération de l'énergie des fumées est principalement réalisée par le préchauffage de l'air de combustion dans des régénérateurs. L'enfournement de la matière à vitrifier est assuré par un dispositif orienté verticalement dans lequel la matière à vitrifier s'écoule de haut en bas à contre-courant d'une petite partie des fumées qui sont évacuées de bas en haut. Cet écoulement à contre courant est destiné à préchauffer les matières premières à vitrifier. Pour éviter le colmatage de celles-ci dans ce dispositif, la température des fumées doit être limitée à environ 700 à 800°C. Pour abaisser la température des fumées issues de la combustion, celles-ci traversent au préalable une zone d'épuisement comportant une voûte plus basse que celle située dans la zone de combustion. La faible hauteur de voûte s'explique par la nécessité de limiter la hauteur de chute des matières premières et la nécessité d'introduire les fumées en bas du préchauffeur vertical. Ce brevet concerne un four à aéro-combustion et ne traite pas du problème de l'optimisation d'une zone de récupération d'un four dans laquelle circule l'essentiel des fumées d'une oxy-combustion, objet de l'invention.

FR 2 711 981(9313021) divulgue un four de fusion de matières vitrifiables à oxy-combustion comprenant une zone de récupération, laquelle est séparée de la zone de combustion par un écran de protection contre le rayonnement. La hauteur de la voûte est légèrement abaissée dans la zone de récupération de sorte d'accélérer la vitesse des fumées de combustion convergeant vers les matières vitrifiables. La hauteur de la voûte dans cette zone de récupération est néanmoins maintenue très au-dessus de la face inférieure de l'écran 11 de sorte de maintenir un volume de fumées important. Ce volume important est supposé nécessaire à l'homme du métier pour assurer une bonne émittance des fumées semi-transparentes. Cette hauteur de voûte importante ne permet pas une efficacité optimale de la zone de récupération comme le divulgue notre invention.

US 5 536 291 divulgue un four de fusion de matières vitrifiables à aéro-combustion. Ce brevet divulgue une conception de four permettant de réduire les émissions d'oxydes d'azote NOx. Un moyen connu par l'homme du métier pour abaisser la formation de NOx consiste à réaliser la combustion en défaut d'air. Le four selon ce brevet comprend une zone de combustion dans laquelle sont implantés des brûleurs. Lorsqu'il est prévu que ces brûleurs fonctionnent en défaut d'air, le four comprend une zone supplémentaire destinée à compléter la combustion. Cette zone est équipée d'une paire de brûleurs alimentés avec un fort excès d'air de sorte d'apporter l'oxygène complémentaire pour terminer la combustion des fumées provenant de la zone de fusion. Pour favoriser un brassage efficace entre les fumées provenant de la zone de fusion et l'oxygène apporté dans la zone supplémentaire, la hauteur de la voûte est abaissée dans cette zone. La présence d'écrans de part et d'autre de cette zone supplémentaire et l'abaissement de la voûte dans cette zone permettent également de renforcer le transfert de chaleur par convection entre les fumées et le tapis de matières premières résultant de l'augmentation de la vitesse des fumées. Le transfert par convection peut ainsi compenser la faible émittance des fumées. Néanmoins, cette configuration ne convient que pour un taux de calcin élevé dans le batch de sorte de limiter l'envol de poussières.

La fonction de cette zone supplémentaire étant principalement liée à l'oxydation des imbrûlés, elle n'est pas optimisée pour épuiser thermiquement des fumées, notamment d'oxy-combustion.

L'invention a pour but, surtout, d'améliorer les échanges thermiques entre les fumées et les matières à chauffer, notamment constituées par un tapis de matières à vitrifier, de façon à épuiser au mieux l'énergie thermique des fumées avant qu'elles ne soient évacuées par la cheminée.

Selon l'invention, un four de chauffage et/ou de fusion de matières à vitrifier dont l'équipement de chauffage est au moins partiellement à oxy-combustion, comprend :

- une cuve recouverte par une voûte, contenant un bain de matières en fusion,

- une zone de combustion munie de moyens de chauffage, de sorte que la cuve (3) contient un bain (7) de matières en fusion lorsque le four est en fonctionnement, la combustion du four, en particulier l'oxy-combustion générant des fumées à haute température avec un débit $Flow_{flue}$,
- au moins une entrée située en amont du four pour l'enfournement des matières à chauffer,
- au moins une zone de récupération entre l'entrée et la zone de combustion, recouvrant au moins une partie du tapis de matières premières flottant sur le bain en fusion, la majorité des fumées d'oxy-combustion circulant dans la ou les zones de récupération,
- au moins une sortie en aval pour les matières chauffées ou fondues,
- au moins une ouverture d'évacuation des fumées prévue en amont de la zone de récupération,

est caractérisé en ce que la hauteur moyenne optimisée ($H_{opt}$) de chaque zone de récupération est telle que l'on favorise le rayonnement vertical des fumées vers la surface du tapis au détriment du rayonnement horizontal parallèle à la surface du tapis et en ce que, la voûte surmontant la zone de récupération présente une surface intérieure qui est plus basse, que le bord inférieur du pignon au débouché de la zone de récupération dans la zone de combustion, et la surface intérieure de la zone de récupération est continue, suivant la direction longitudinale du four, depuis la zone de combustion au moins jusqu'à l'ouverture d'évacuation des fumées

Selon le mode de construction de la voûte, celle-ci aura une forme en voûte cintrée ou plate. La hauteur optimisée $H_{opt}$ selon l'invention représente la valeur moyenne transversale de la hauteur de la voûte.

De même, si la hauteur de la voûte varie sur la longueur de la zone de récupération, la hauteur optimisée $H_{opt}$ selon l'invention représente la valeur moyenne de la hauteur de la voûte le long de la zone de récupération.

Dans le cas où la hauteur de la voûte varie sur la largeur et la longueur, la hauteur optimisée $H_{opt}$ selon l'invention représente la valeur moyenne de la hauteur de la voûte sur l'ensemble de la surface de la zone de récupération.

Selon un mode de construction de la voûte, celle-ci à une surface intérieure structurée afin d'augmenter son émissivité. Dans ce cas, la hauteur optimisée $H_{opt}$ représente la valeur moyenne.

Dans le cas où le niveau de la surface du tapis varie sur la largeur et la longueur de la zone, la hauteur optimisée $H_{opt}$ représente la distance moyenne entre la surface du tapis et la voûte.

Par émissivité du tapis, on entend l'émissivité totale hémisphérique.

Le débit spécifique de fumées sFlowflue est exprimé en kg/sec par m2 de surface de la zone de récupération.

Selon l'invention, le nombre $N_{recu}$ est égal à 2.

Pour la détermination de la hauteur de la zone de récupération selon l'invention, il est nécessaire au préalable de déterminer la surface de la zone de récupération. Celle-ci est définie, entre autres, par le taux de récupération d'énergie souhaité dans la zone de récupération. La surface prise en compte pour le calcul de la hauteur de la zone est celle du tapis de matières premières dans la zone de récupération. Cette surface est sensiblement horizontale mais peut onduler selon le type d'enfournement et la vitesse de fusion. Par simplification, la surface du tapis projetée à plat est utilisée pour le calcul. Pour une optimisation de l'épuisement des fumées, il est souhaitable que le tapis de matières premières couvre au mieux la surface du verre dans la zone de récupération. La détermination de la surface optimale est abordée plus en détail dans l'exemple de réalisation de l'invention.

Pour une géométrie standard rectangulaire, la surface de la zone est donnée par longueur x largeur. Préférentiellement, la zone de récupération est de faible largeur avec une forme allongée. Une largeur réduite permet de limiter le rayonnement horizontal et favorise un écoulement unidirectionnel et homogène des fumées. Néanmoins, sa largeur est définie selon le type d'enfournement, la disposition du tapis sur le bain et la conception globale du four. Après détermination de la largeur de la zone de récupération selon ces considérations, la longueur est déterminée selon la surface requise.

Le taux visé de récupération de l'énergie des fumées est dicté par des données telles que le coût de l'énergie, des taxes éventuelles de $CO_2$, les pertes thermiques supplémentaires par la prolongation du four résultant de l'ajout de la zone de récupération et selon le coût d'investissement de cette zone.

L'analyse de ces données conduit à retenir une valeur minimale de la densité de flux de récupération moyenne sur la zone de récupération. Elle est de l'ordre de 30 kW/m2 pour un four verre creux traditionnel, sachant qu'elle varie selon l'évolution des coûts.

A partir de ce flux, la surface de la zone de récupération est définie selon l'invention par :

$$S_{recu} = q^{-1.7} \cdot 10570 \cdot Flow_{flue} \cdot \varepsilon_{batch}^{0.65}$$

dans laquelle la surface de la zone de récupération $S_{recu}$ est exprimée en m2 en fonction de la densité de flux q, exprimé en kW/m2, du débit de fumées $Flow_{flue}$ exprimé en kg/sec et de l'émissivité moyenne du tapis $\varepsilon_{batch}$ dans la zone de récupération.

Dans le four selon l'invention la voûte surmontant la zone de récupération présente une surface intérieure qui est plus basse, que le bord inférieur du pignon au débouché de la zone de récupération dans la zone de combustion, et la surface intérieure de la zone de récupération est continue, suivant la direction longitudinale du four, depuis de la zone de combustion au moins jusqu'à l'ouverture d'évacuation des fumées.

Dans la zone de récupération, la voûte peut être plate et constituée de blocs réfractaires accrochés à une structure porteuse.

La section de passage des fumées au-dessus des matières premières dans la zone de récupération est suffisamment réduite pour favoriser un écoulement unidirectionnel et homogène des fumées. La faible hauteur de voûte permet également de réduire les échanges de chaleur radiatifs dans les fumées suivant la direction horizontale.

Le four selon l'invention comprend avantageusement, au voisinage de l'entrée d'enfournement, un moyen de chauffage intense pour faire fondre une couche superficielle des matières introduites et augmenter l'émissivité du tapis de matières à vitrifier.

L'épaisseur de la couche superficielle mise en fusion peut être de quelques millimètres, de préférence d'au moins 1 mm.

Le moyen de chauffage intense peut être constitué par un rideau de flammes dirigées vers le bas à partir d'une rampe de brûleurs s'étendant sur toute la largeur du four, au-dessus du tapis de matières à vitrifier.

En variante, le moyen de chauffage intense peut être constitué par un rayonnement électromagnétique s'étendant sur toute la largeur du four, au-dessus du tapis de matières à vitrifier.

Avantageusement, l'ouverture de sortie des fumées s'étend sur toute la largeur de la zone de récupération à son extrémité amont, en partie haute. L'ouverture de sortie des fumées peut présenter une forme allongée rectangulaire dont la grande dimension est orientée suivant la largeur de la zone de récupération.

Pour renforcer le rayonnement vertical vers le tapis, la surface intérieure de la voûte peut avantageusement être structurée de sorte d'augmenter son émissivité. Néanmoins, ces structures ne doivent pas avoir un relief trop marqué afin de ne pas générer de recirculation dans l'écoulement des fumées. La surface doit restée globalement continue.

Le four peut comporter un moyen de dopage des fumées dans la zone de récupération pour augmenter l'émittance des fumées, par ensemencement à l'aide de particules appropriées, en particulier poudre de calcin ou de matières à vitrifier. Le moyen de dopage peut comprendre des moyens d'injection des particules depuis la voûte de la zone de récupération.

Des moyens d'injection peuvent être prévus pour assurer la formation d'un rideau de particules contre le rayonnement au débouché de la zone de récupération dans la zone de combustion.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig. 1 est une coupe verticale longitudinale partielle d'un four de fusion de matières vitreuses,

Fig.2 est un diagramme illustrant la variation de l'émittance des fumées portée en ordonnée, en fonction de l'épaisseur de la couche de fumées en mètres.

Fig.3 représente en partie supérieure une vue simplifiée d'une zone de récupération classique avec un écoulement du tapis de matières premières et des fumées à contre-courant, et en partie inférieure un graphique de l'évolution de la température en ordonnée, en fonction de la position sur la longueur de la zone.

Fig.4 est une représentation semblable à Fig.3 pour une zone de récupération avec une hauteur de voûte limitée selon l'invention.

Fig.5 est une courbe illustrant le flux thermique (en kW) de récupération transmis par les fumées dans le tapis porté en ordonnée, en fonction de la hauteur de la voûte, et

Fig. 6 est une coupe verticale longitudinale semblable à celle de Fig. 1 d'un four avec zone de récupération à voûte plate.

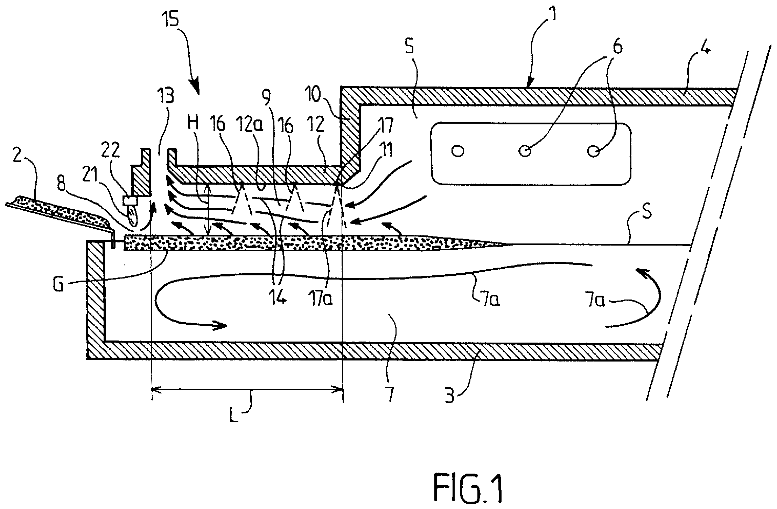

Un four selon l'invention diffère de Fig. 1 en ce que la voûte de récupération selon l'invention ne sera pas au même niveau que le bord inférieur (11) du pignon mais les procédés selon l'invention sont applicables à un four selon Fig. 1.

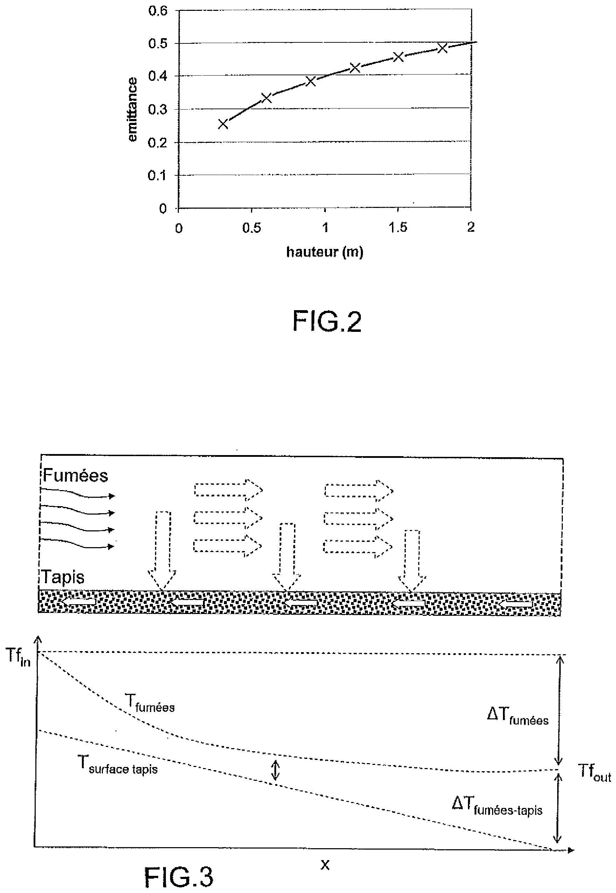

Dans une zone de récupération de l'énergie thermique des fumées par une charge telle que les matières premières, on cherche à maximiser le flux thermique entre les fumées, la voûte et la charge. La nature semi-transparente des fumées cause une variation de leur émittance en fonction de leur volume. Pour des fumées d'oxy-combustion, la Fig. 2 montre un exemple de l'augmentation de l'émittance en fonction de l'épaisseur de la couche de fumées, celles-ci ayant une température de 1500 °K.

On voit clairement sur cette Fig.2 l'intérêt d'une couche épaisse pour augmenter l'émittance des fumées. Une couche épaisse émettra ainsi une densité de flux de rayonnement plus élevé pour une température donnée. On s'attend donc à un meilleur transfert d'énergie et un meilleur rendement de la zone de récupération pour une épaisseur de fumées plus importante.

La densité de flux net entre les fumées et le tapis des matières premières (charge) est ensuite déterminée par leurs échanges radiatifs. Plus l'écart de température est important, plus la densité de flux net est élevée. Pour maintenir un écart de température et donc une densité de flux net suffisante sur toute la longueur d'une zone de récupération, on conçoit l'écoulement des fumées et du tapis en contre-courant.

La Fig. 3 comprend en partie supérieure une vue simplifiée d'une zone de récupération classique avec un écoulement du tapis de matières premières et des fumées à contre-courant et en partie inférieure un graphique montrant l'évolution de la température en fonction de la position sur la longueur de la zone.

La courbe $T_{fumées}$ représente l'évolution de la température des fumées le long de la zone de récupération. La courbe $T_{surface}$ tapis représente l'évolution de la température surfacique du tapis le long de la zone de récupération.

Sur Fig.3, $\Delta T_{fumées-tapis}$ représente l'écart de température entre les fumées et le tapis de matières premières. Il est souhaitable de maintenir cet écart de température $\Delta T_{fumées-tapis}$ important le long de la zone de récupération car il détermine la densité du flux thermique.

Comme on peut le voir sur cette figure, la température des fumées baisse progressivement le long de la zone de récupération du fait de l'épuisement thermique des fumées.

Celui-ci conduit à un gradient thermique $Tf_{in}-Tf_{out} = \Delta T_{fumées}$ entre l'entrée et la sortie de la zone de récupération.

La présence d'un gradient thermique horizontal dans les fumées engendre également un flux de rayonnement horizontal.

Ce rayonnement horizontal conduit à une homogénéisation partielle de la température des fumées sur la longueur de la zone de récupération. Pour une température d'entrée $Tf_{in}$ donnée, la température des fumées chute d'abord rapidement à cause du flux net dans le tapis et également à cause des pertes par rayonnement horizontal. Les pertes par rayonnement horizontal sont ensuite absorbées par les fumées et parois situées en aval. L'énergie transmise dans le tapis par les fumées proches de la sortie est donc partiellement compensée par l'apport du rayonnement horizontal. Ce phénomène conduit à limiter la baisse de température des fumées.

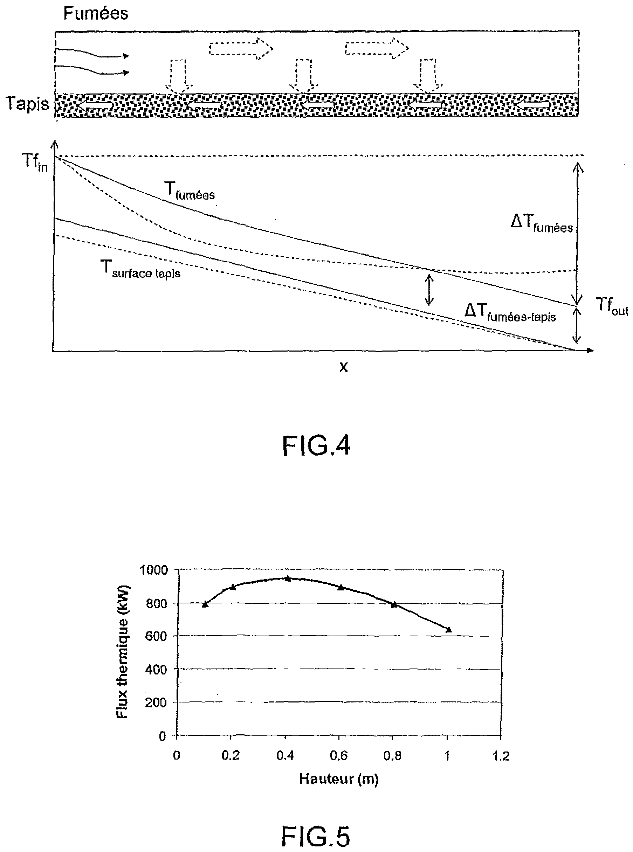

Pour répondre à ce problème l'invention propose une diminution de l'épaisseur de la couche de fumées sur le tapis, comme représenté en Fig. 4. Une telle diminution du volume diminue l'émittance des fumées. Toutefois, cette voûte abaissée diminue également la section de passage du rayonnement horizontal ce qui ce traduit par un flux horizontal plus faible. De cette manière, l'homogénéisation horizontale des fumées est efficacement diminuée. Evidemment, la présence d'un gradient horizontal de température des fumées prononcé conduit toujours à une densité de flux importante. Néanmoins, la diminution de la section de passage selon l'invention conduit à une baisse globale du flux de rayonnement horizontal.

La Fig.4 représente de nouveau une vue simplifiée d'une zone de récupération comme en Fig. 3 mais avec une hauteur de voûte limitée selon l'invention. Sur cette figure, les courbes de température de la Fig.3 sont reprises en pointillé. Comme on peut le voir sur cette figure, la température des fumées, représentée par une courbe en trait continu, baisse d'une manière plus régulière de long de la zone de récupération. L'échange net entre les fumées et le tapis est ainsi optimisé sur toute la longueur de la zone de récupération. Comme résultat, on trouve un meilleur échange thermique total et une température de fumées $Tf_{out}$ abaissée comparé à la Fig. 3.

La Fig. 5 montre une courbe exprimant le flux thermique transmis par les fumées vers le tapis de matières premières, appelé flux thermique de récupération, dans une zone de récupération en fonction de la hauteur de la voûte. Cette courbe est déterminée par simulation numérique pour une zone de récupération de 6.4m de largeur et 3.7m de longueur. Le débit des oxy-fumées est fixé à 1.5kg/s, l'émissivité du tapis fixé à 0.7, la température des fumées à l'entrée de la zone de récupération environ 1400°C. Les pertes par la voûte et le rayonnement parasitaire du four sont pris en compte dans ce calcul. La courbe du flux thermique de récupération représente seulement la fraction de l'épuisement des fumées due à la transmission de chaleur desdites fumées vers le tapis dans la zone de récupération. Les flux thermiques des pertes par la voûte et le rayonnement parasitaire du four ne sont par représentés dans Fig.5

Comme on peut le voir sur cette courbe en Fig.5, la réduction de la hauteur de la voûte conduit à une augmentation du flux thermique de récupération. On voit également sur cette figure qu'une hauteur de voûte trop faible entraîne une baisse du flux thermique de récupération en raison d'une baisse trop importante de l'émittance des fumées. Il existe donc une hauteur optimale de la voûte selon l'invention pour maximiser l'épuisement thermique des fumées.

La courbe montre qu'un flux optimal peut être obtenu avec une hauteur de seulement 0.4m. Selon la courbe d'émittance des fumées en fonction de la hauteur de la Fig.2, une valeur de 0.4 m permettrait seulement un émittance d'environ 0.25. Une telle valeur semble beaucoup trop faible pour assurer un flux thermique satisfaisant dans le tapis.

L'invention vise à permettre de déterminer, d'une manière aussi simple que possible, une hauteur optimale de voûte.

Cette hauteur optimale dépend d'une manière complexe de nombreux paramètres (propriétés semitransparentes des fumées et de leur spectre d'absorption, émissivité du tapis et de la voûte, gradient de température horizontal, et bien sûr des températures des fumées, du tapis, de la longueur et largeur de la zone, du débit des fumées, des pertes par la voûte...).

Pour répondre au problème de la détermination de la hauteur optimale pour un jeu de paramètres donnés, nous pouvons imaginer différentes méthodes, par exemple :

Méthode 1.

Pour un débit de fumées et une vitesse de matières premières données, on réalise une simulation numérique de la thermique (écoulement et rayonnement) pour différentes hauteurs. Les résultats de la simulation sont analysés pour déterminer le flux thermique de récupération des fumées dans le tapis en fonction de la hauteur de la zone.

Méthode 2.

On réalise des mesures sur une maquette d'une zone de récupération de largeur réduite. La surface du tapis peut être représentée par un refroidisseur avec une surface variable (température et émissivité). La hauteur de la voûte de cette maquette est ajustable. Des mesures de température permettront d'établir le bilan thermique de la maquette et d'extraire le flux thermique de récupération des fumées dans la charge. Une série d'essais à différentes hauteurs de la voûte pour un jeu de paramètres donnés permettent ensuite de déterminer la hauteur optimale.

Méthode 3.

On construit une petite série de fours de fusion identiques avec la seule différence d'une variation de la hauteur de la voûte en zone de récupération. Ensuite on établit les bilans thermiques des fours et notamment des zones de récupération. Or, dans la pratique industrielle, il est improbable que ces fours soient exploités d'une manière identique, même si on réussit à effectuer des constructions identiques.

Ces méthodes sont plus ou mois fastidieuse et onéreuses.

Pour résoudre le problème de la détermination de la hauteur optimale pour un jeu de données, l'invention propose une méthode de détermination simple, pour des fumées d'oxy-combustion. Les inventeurs ont trouvé que l'émissivité du tapis, le débit des fumées et la taille de la zone de récupération, jouent un rôle prépondérant, en particulier pour la gamme préférentielle de valeurs suivante.

Gamme préférentielle de valeurs :

Fumées d'oxy-combustion
Température entrée des fumées : 1350-1500°C
Température sortie des fumées : 700°C-1300°C
Tirée du four : supérieure à 50 t/jour

La hauteur optimale peut être déterminée en fonction de l'émissivité du tapis $\varepsilon_{tapis}$ par la formule suivante :

$$H_{opt} = 0.6^{1-\varepsilon_{batch}} \cdot N_{recu} \cdot sFlow_{flue}^{0.5}$$

dans laquelle la hauteur moyenne optimisée $H_{opt}$ est exprimée en mètre en fonction de l'émissivité moyenne du tapis $\varepsilon_{batch}$ dans la zone de récupération, d'un nombre $N_{recu}$ correspondant à une constante sans dimension et du débit spécifique de fumées $sFlow_{flue}$ exprimé en kg/sec par m² de surface de la zone de récupération.

Cette formule donne la hauteur optimisée $H_{opt}$ en mètre en fonction de l'émissivité du tapis $\varepsilon_{batch}$ à l'entrée du four. Selon l'invention, le nombre $N_{recu}$ est égal à 2.

On trouve pour l'exemple précédent en Fig.5 une hauteur optimisée de 0.4 m. Cette valeur correspond au maximum du flux de récupération selon la courbe de Fig. 5. Cette faible hauteur de voûte de 0.4 m dans la zone de récupération conduit à une vitesse des fumées d'environ 2-3m/s en fonction de la température des fumées. Cette valeur est tout à fait acceptable pour limiter l'envol des poussières du tapis. Toutefois, la qualité des matières premières et le début de la fusion surfacique jouent un rôle déterminant pour le taux d'envol. Selon le taux d'envol des matières premières, il pourra être nécessaire d'augmenter la hauteur de la zone de récupération déterminée selon l'invention de sorte de limiter la vitesse des fumées à une valeur acceptable. Par exemple, pour un tapis de matières premières avec peu de calcin, il est souhaitable de rester en dessous d'une vitesse des fumées de 5 m/sec pour limiter l'envol de particules.

Il s'agit donc d'une solution extrêmement simple et rapide pour déterminer la hauteur optimisée d'une zone de récupération. Seule la connaissance de l'émissivité du tapis est requise.

Exemple d'application de l'invention :

On suppose un four de production de verre creux d'une capacité de 400 t/jour, à partir de matières premières contenant 50% de calcin.

L'émissivité moyenne du tapis $\varepsilon_{tapis}$ dans la zone de récupération est estimée à 0.7.

La combustion du four génère des fumées d'oxy-combustion avec un débit $Flow_{flue}$ de 1.5 kg/sec. Par simplification, le dégazage du CO2 du tapis n'est pas pris en compte pour le flux gazeux circulant à la surface du tapis.

L'analyse technico-économique d'une zone de récupération ajoutée à ce four conduit à une valeur moyenne de densité de flux q souhaitable de 40 kW/m². Une telle valeur permet un retour sur investissement rapide en fonction des coûts énergétiques.

On détermine en premier lieu la surface de la zone de récupération au moyen de la formule suivante :

$$S_{recu} = q^{-1.7} \cdot 10570 \cdot Flow_{flue} \cdot \varepsilon_{batch}^{0.65}$$

dans laquelle la surface de la zone de récupération $S_{recu}$ est exprimée en m² en fonction de la densité de flux q, exprimée en kW/m², du débit de fumées $Flow_{flue}$ exprimé en kg/sec et de l'émissivité moyenne du tapis $\varepsilon_{batch}$ dans la zone de récupération.

Avec les paramètres retenus, la surface $S_{recu}$ est ainsi de 24 m². Elle permet de récupérer environ 1 MW sur l'énergie des fumées pour le préchauffage du tapis. La moindre énergie nécessaire pour la fusion du tapis dans le four conduit à une légère diminution du débit de fumées. Un rebouclage du calcul peut être réalisé pour améliorer la précision du dimensionnement.

On détermine ensuite la hauteur optimale de la zone de récupération à partir de la formule suivante :

$$H_{opt} = 0.6^{1-\varepsilon_{batch}} \cdot N_{recu} \cdot sFlow_{flue}^{0.5}$$

dans laquelle la hauteur moyenne optimisée $H_{opt}$ est exprimée en mètre en fonction de l'émissivité moyenne du tapis $\varepsilon_{batch}$ dans la zone de récupération, d'un nombre $N_{recu}$ correspondant à une constante sans dimension et du débit spécifique de fumées $sFlow_{flue}$ exprimé en kg/sec par $m^2$ de surface de la zone de récupération.

Cette formule donne la hauteur optimisée $H_{opt}$ en mètre en fonction de l'émissivité du tapis $\varepsilon_{batch}$ à l'entrée du four. Selon l'invention, le nombre $N_{recu}$ est égal à 2.

A titre d'exemple, pour une émissivité de 0.7, et un nombre $N_{recu}$ de 1.8 et un $sFlow_{flue}$ de 0.0625 correspondant au ratio de 1.5/24, on trouve une hauteur de 0.4 m.

Selon le four, les données d'entrée seront à déterminer au cas par cas.

Une émissivité de 0.2 représente une valeur typique pour un tapis de matières premières sans calcin.

En fonction de la longueur de la zone d'épuisement, la surface du tapis commence à fondre et ainsi l'émissivité de ladite surface augmente. L'ajout de calcin augment également l'émissivité du tapis.

La variation de l'émissivité du tapis sur la longueur de la zone, ou la variation de la composition des matières premières, cause donc une variation de la hauteur optimisée pour un four donné. Comme on peut le voir sur la courbe de Fig.5, une légère déviation de la hauteur par rapport à la hauteur optimisée entraîne seulement une dégradation limitée du flux de récupération dans le tapis. On peut donc trouver un compromis autour d'une hauteur optimisée qui sera satisfaisant pour d'autres valeurs d'émissivité du tapis et du débit de fumées.

Une hauteur de 0.4m présente par exemple un bon compromis pour différentes valeurs d'émissivité. Un autre avantage de cette hauteur réside dans la limitation de la vitesse des fumées pour réduire le risque d'envolement des poussières.

En fonction des contraintes constructives, on peut également trouver des déviations par rapport à la hauteur optimisée. Ceci est notamment valable pour une voûte cintrée. Pour une telle voûte, il est avantageux de rapprocher les hauteurs minimale et maximale le mieux possible de la hauteur visée.

La voûte dans la zone de récupération peut comporter des génératrices horizontales, auquel cas la hauteur de la voûte reste constante sur toute la zone de récupération.

Dans la zone de récupération, la voûte peut être plate et constituée de blocs réfractaires accrochés à une structure métallique.

Pour une matière première standard, avec peu de calcin, l'émissivité est d'environ 0.2. Lorsque la température des matières premières augmente, notamment vers 850°C pour du verre sodocalcique avec du carbonate de soude, il y a formation d'une phase liquide qui modifie les propriétés de la surface ce qui se traduit par une augmentation de son émissivité.

La hauteur de la voûte peut également varier le long de la zone de récupération pour optimiser le rayonnement vertical par rapport au rayonnement horizontal, par exemple en prenant en compte l'évolution de l'émissivité du tapis de matières premières.

Le four selon l'invention comprend avantageusement, au voisinage de l'entrée d'enfournement, un moyen de chauffage intense pour faire fondre une couche superficielle des matières introduites, pour augmenter l'émissivité du tapis de matières à vitrifier dès l'entrée du four, et améliorer ainsi le transfert de chaleur radiatif entre le tapis et les fumées dans la zone de récupération.

Cette solution est particulièrement intéressante pour tous les fours à faible taux de calcin tels que les fours pour le verre de float, de table, fibre, verre solaire...

L'épaisseur de la couche superficielle mise en fusion est de l'ordre de quelques millimètres, de préférence d'au moins 1 mm et doit permettre une émissivité supérieure à 0.4.

Le moyen de chauffage intense est avantageusement constitué par un rideau de flammes dirigées vers le bas à partir d'une rampe de brûleurs s'étendant sur toute la largeur du four, au-dessus du tapis de matières à vitrifier. Le moyen de chauffage peut également être constitué par un émetteur de rayonnement électromagnétique s'étendant sur toute la largeur du four, au-dessus du tapis de matières à vitrifier, tel que l'infrarouge ou les microondes.

Avantageusement, l'ouverture de sortie des fumées s'étend sur toute la largeur du four à son extrémité amont, en partie haute, de préférence selon une forme allongée rectangulaire dont la grande dimension est orientée suivant la largeur du four. Les fumées sont ainsi évacuées verticalement.

Le four peut comporter un moyen de dopage des fumées dans la zone de récupération pour augmenter l'émittance des fumées, par ensemencement à l'aide de particules appropriées, notamment poudre de calcin ou de matières à vitrifier.

Le moyen de dopage peut comprendre des moyens d'injection des particules depuis la voûte de la zone de récupération. Avantageusement, les moyens d'injection sont prévus pour assurer la formation d'un rideau de particules contre le rayonnement au débouché de la zone de récupération dans la zone de combustion.

Le rideau permet d'arrêter, ou réduire, le rayonnement de la zone de combustion vers la zone de récupération, tout en laissant passer les fumées.

En se reportant à Fig. 1 des dessins, on peut voir un four 1 de chauffage et de fusion de matières à vitrifier 2, qui comprend une cuve 3 recouverte par une voûte 4.

Les termes "amont" et "aval" sont à comprendre suivant le sens d'avance des matières à vitrifier, c'est-à-dire suivant le sens allant de la gauche vers la droite sur Fig. 1.

Le four comporte une zone de combustion 5 munie de moyens de chauffage, généralement constitués par des brûleurs 6, de sorte que la cuve 3 contient un bain 7 de matières en fusion lorsque le four est en fonctionnement. Des courants de convection se produisent dans le bain 7, comme illustré par les flèches 7a, entre l'amont du bain à température moins élevée et l'aval. Une entrée 8 est prévue en amont du four pour l'enfournement des matières à vitrifier 2.

Une zone de récupération 9 est située dans le four entre l'entrée 8 et la zone de combustion 5. Une sortie pour le verre en fusion est située à l'extrémité aval de la zone de combustion 5.

La liaison de la voûte entre zone de combustion 5 et la zone de récupération 9 est réalisée au moyen d'un pignon 10.

La hauteur H de la voûte 12 dans la zone de récupération 9 est inférieure à la hauteur de la voûte 4 dans la zone de combustion.

Les matières introduites en entrée 8 forment un tapis G qui flotte sur le bain 7 et qui entre progressivement en fusion. Le niveau supérieur du bain 7 est désigné par la lettre S.

Une ouverture 13 d'évacuation des fumées est prévue à l'extrémité de la zone de récupération 9, côté enfournement.

Selon l'invention, la voûte 12 surmontant la zone de récupération 9 présente une surface intérieure 12a qui se trouve plus basse, que le bord inférieur 11 du pignon 10 au débouché de la zone de récupération 9 dans la zone de combustion 5. La surface intérieure 12a est continue selon la direction longitudinale du four depuis la zone de combustion 5 au moins jusqu'à l'ouverture d'évacuation 13 des fumées, et généralement jusqu'à l'extrémité amont. La surface de la voûte est continue, c'est-à-dire qu'elle ne comprend pas de saillies ou de décrochements importants pouvant induire des recirculations de fumées. Néanmoins, le changement de la hauteur de la voûte le long de la zone de récupération peut être réalisé par une succession de petites marches.

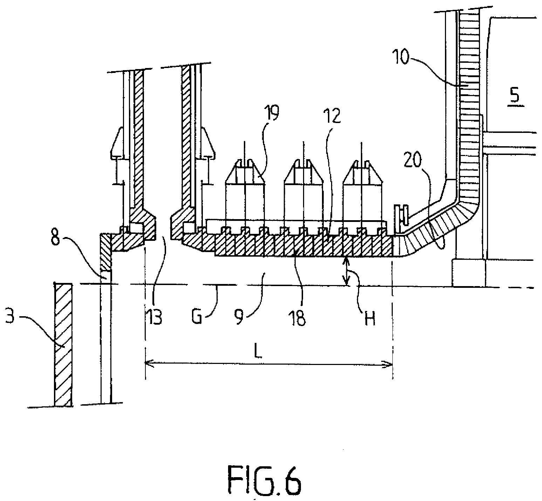

La voûte 12 peut être cintrée, ou plane comme exposé plus loin avec référence à Fig. 6. Lorsque la voûte 12 est cintrée, la hauteur H considérée correspond à la moyenne de la voûte sur la largeur du four. La surface intérieure 12a comporte donc des génératrices parallèles à la direction longitudinale du four. Ces génératrices peuvent être horizontales, auquel cas la section transversale de la zone de récupération 9 est constante. En variante, les génératrices de la voûte 12a sont inclinées de haut en bas vers l'amont, auquel cas la section transversale de la zone de récupération diminue d'aval en amont.

La section de passage des fumées, dans la zone de récupération 9, se trouve ainsi suffisamment réduite pour favoriser un écoulement sensiblement unidirectionnel des fumées comme illustré par les flèches 14, en évitant une recirculation des fumées qui homogénéiserait la température des fumées dans la zone de récupération. La surface intérieure 12a de la voûte 12 dans la zone de récupération est dépourvue de toute saillie vers le tapis G, notamment saillie verticale vers le bas, sur toute la longueur de la voûte, une telle saillie étant susceptible de créer des tourbillons et recirculations de fumées.

La hauteur réduite de la section transversale de la zone de récupération 9 permet de limiter le rayonnement parasitaire horizontal dans la zone de récupération qui a tendance à homogénéiser la température des fumées et donc à réchauffer les fumées vers leur sortie, ce qui n'est pas favorable à un épuisement maximal des fumées.

La disposition de l'invention favorise l'échange thermique par rayonnement vertical entre les fumées et le tapis de matières G, ce qui correspond au mode d'échauffement préféré du tapis.

L'ouverture 13 de sortie des fumées est prévue dans la partie supérieure de la voûte 12, vers son extrémité amont. Cette ouverture 13 a la forme d'une fente rectangulaire dont la grande dimension est perpendiculaire au plan de Fig.1, et parallèle à la largeur de la zone de récupération 9. L'ouverture de sortie 13 s'étend suivant toute la largeur du four, ce qui favorise un écoulement laminaire des fumées sur toute la largeur de la zone de récupération et évite la formation de poches où les gaz sont stagnants. Ceci permet également d'éviter des boucles de recirculation. La largeur du four peut atteindre 6 mètres et plus, notamment dans le cas d'un four pour production de verre flotté.

Un acheminement optimal des fumées est ainsi assuré par la zone de récupération 9 selon l'invention, avec convection à contre-courant du tapis G et débit homogène de gaz de fumées sur la largeur du four. La sortie des fumées est équipée de moyens permettant d'ajuster la distribution du débit de fumées sur la largeur du four de sorte de régler la répartition des fumées sur la largeur de la zone de récupération. La vitesse des fumées est suffisante sur toute la longueur de la zone de récupération 9 pour éviter la formation d'une couche stagnante et plus froide sur la surface du tapis. La vitesse des fumées est également suffisante pour évacuer le gaz carbonique $CO_2$ dégagé par la réaction des matières premières lors de leur échauffement et pour favoriser son évacuation rapide par la sortie 13 de la cheminée.

Pour améliorer l'échange thermique entre les fumées et le tapis de matières à vitrifier, le four comporte avantageusement un moyen de dopage 15 des fumées dans l'ensemble de la zone de récupération, afin de renforcer l'émittance des fumées. Le moyen de dopage 15 peut comprendre des dispositifs 16 d'injection de particules, prévus dans la voûte de la zone de récupération, judicieusement répartis suivant la longueur de cette voûte. Au voisinage du débouché de la zone de récupération 9 dans la zone de combustion 5, on peut prévoir un dispositif 17 d'injection plus intense de particules permettant de réaliser un rideau 17a de particules à l'encontre du rayonnement de la zone de combustion 5. Ce rideau 17a permet le passage des fumées tout en freinant, ou arrêtant, le rayonnement provenant de la zone de combustion.

Les particules injectées par les dispositifs 16 et 17 pour augmenter l'émittance des fumées peuvent être des particules de suie, de charbon, ou de petroleum coke, ou des particules de calcin ou de matières à vitrifier finement broyées.

Il est à noter que l'épuisement des fumées, c'est-à-dire l'abaissement de leur température à la sortie 13 se traduit par un gradient de température suivant la direction "horizontale", qui engendre un flux thermique radiatif horizontal ayant tendance à équilibrer la température des fumées, et donc néfaste à l'épuisement. Pour un gradient thermique horizontal donné, le flux thermique horizontal est directement proportionnel à la section d'ouverture de la zone de récupération 9. On voit donc immédiatement l'intérêt de réduire au minimum la hauteur de cette zone de récupération 9.

Il convient également de noter que les avantages évoqués précédemment de la zone de récupération 9 selon l'invention, pour améliorer l'épuisement des fumées et le réchauffement des matières introduites dans le four, concernent non seulement le cas de matières à vitrifier, mais tout type de matières à réchauffer. C'est le cas en particulier de fours de réchauffage de produits sidérurgiques auxquels l'invention peut être appliquée directement.

Dans le cas d'une voûte cintrée, l'homme du métier connait des moyens pour limiter la dimension de la flèche de la voûte. L'un des moyens consiste à réduire l'angle au centre de la voûte, par exemple à 40° au lieu de 60°. Cependant cela conduit à une poussée latérale importante ce qui limite la réduction admissible de l'angle.

Fig. 6 illustre, partiellement, un exemple de réalisation de four avec zone de récupération 9 selon l'invention dans laquelle la voûte 12 est plate et formée avec des blocs réfractaires 18 suspendus à une structure métallique 19 qui surmonte extérieurement les blocs de la zone de récupération. Les parties du four de Fig. 6 jouant un rôle analogue à des parties déjà décrites à propos de Fig. 1 sont désignées par les mêmes références numériques, sans que leur description soit reprise. On pourra noter une transition progressive du pignon 10 de la chambre de combustion, à la voûte 12 de la zone de récupération selon une paroi inclinée 20.

La disposition de Fig. 6 est également applicable à des produits autres que des matières à vitrifier, notamment à des produits sidérurgiques qu'il conviendrait de réchauffer dans la zone de récupération.

Dans la zone de récupération 9, le tapis G de matières à vitrifier présente une surface ayant une faible émissivité, notamment d'environ 0.2, ce qui n'est pas favorable à un transfert de chaleur élevé par rayonnement avec les fumées.

Pour augmenter l'émissivité de la surface du tapis G on prévoit, comme illustré sur Fig.1, un moyen de chauffage intense 21 au voisinage de l'entrée d'enfournement 8 pour provoquer une surfusion rapide de la couche superficielle du tapis G. L'épaisseur de la couche superficielle mise en fusion est de quelques millimètres, généralement d'au moins 1 mm.

Le moyen de chauffage 21 peut être situé au voisinage de l'entrée d'enfournement 8, ou exactement à l'entrée d'enfournement 8.

Ce moyen de chauffage 21 est avantageusement réalisé par une rampe de brûleurs 22 répartis suivant toute la largeur de l'entrée d'enfournement, et orientés de telle sorte que leurs flammes soient dirigées vers le bas. Les brûleurs sont fixés à une traverse au-dessus du tapis de matières à vitrifier, en étant orientés vers le bas.

D'autres moyens de chauffage intense peuvent être envisagés, par exemple un dispositif à rayonnement infrarouge ou à micro-ondes.

Cette disposition, provoquant la surfusion rapide de la couche superficielle du tapis, améliore sensiblement l'émissivité du tapis et le transfert de chaleur par rayonnement entre les fumées et le tapis.

Une telle disposition est particulièrement intéressante pour tous les fours à faible taux de calcin, tels que les fours pour la production de verre flotté, de verre de table, de fibres de verre, ou de verre solaire.

**Revendications**

1. Four de fusion de matières à vitrifier dont l'équipement de chauffage est au moins partiellement à oxy-combustion comprenant :

   - une zone de combustion (5) munie de moyens de chauffage constitués par des brûleurs (6), de sorte que la cuve (3) contient un bain (7) de matières en fusion lorsque le four est en fonctionnement, la combustion du four, en particulier l'oxy-combustion générant des fumées à haute température avec un débit $Flow_{flue}$,
   - au moins une entrée (8) prévue en amont du four pour l'enfournement des matières à vitrifier (2),
   - au moins une zone de récupération (9), entre l'entrée (8) et la zone de combustion (5), recouvrant au moins une partie du tapis de matières premières flottant sur le bain en fusion,

la majorité des fumées d'oxy-combustion circulant dans la ou les zones de récupération,
- au moins une ouverture (13) d'évacuation des fumées prévue en amont de chaque zone de récupération,

**caractérisé en ce que** :

- la hauteur moyenne optimisée (H$_{opt}$) de chaque zone de récupération est telle que l'on favorise le rayonnement vertical des fumées vers la surface du tapis au détriment du rayonnement horizontal parallèle à la surface du tapis,
- la voûte (12) surmontant la zone de récupération présente une surface intérieure (12a) qui est plus basse, que le bord inférieur (11a) du pignon (11) au débouché de la zone de récupération (9) dans la zone de combustion (5), et la surface intérieure (12a) de la zone de récupération est continue, suivant la direction longitudinale du four, depuis la zone de combustion (5) au moins jusqu'à l'ouverture (13) d'évacuation des fumées.

2. Four selon la revendication 1, **caractérisé en ce que**, dans la zone de récupération (9), la voûte (12) est plate et constituée de blocs réfractaires (18) accrochés à une structure porteuse (19).

3. Four de fusion de matières à vitrifier, selon l'une quelconque des revendications précédentes, comprenant :

- une cuve (3) recouverte par une voûte,
- une zone de combustion (5) munie de moyens de chauffage, notamment de brûleurs (6),
- au moins une entrée (8) située en amont du four pour l'enfournement des matières à chauffer,
- au moins une sortie en aval pour les matières chauffées ou fondues,

la cuve contenant un bain (7) de matières en fusion lorsque le four fonctionne, les matières à vitrifier introduites formant un tapis (G) qui flotte sur le bain et qui entre progressivement en fusion,
**caractérisé en ce qu'**il comporte, au voisinage de l'entrée d'enfournement (8), en amont ou en aval de l'entrée, ou à cette entrée, un moyen de chauffage intense (21) pour faire fondre une couche superficielle des matières introduites, et augmenter l'émissivité du tapis de matières à vitrifier.

4. Four selon la revendication 3, **caractérisé en ce que** le moyen de chauffage intense (21) est constitué par un rideau de flammes dirigées vers le bas à partir d'une rampe de brûleurs (22) s'étendant sur toute la largeur du four, au-dessus du tapis de matières à vitrifier.

5. Four selon la revendication 3, **caractérisé en ce que** le moyen de chauffage intense (21) est constitué par un rayonnement électromagnétique s'étendant sur toute la largeur du four, au-dessus du tapis de matières à vitrifier.

6. Four selon l'une quelconque des revendications précédentes, **caractérisé en ce que** l'ouverture de sortie (13) des fumées s'étend sur toute la largeur du four à son extrémité amont, en partie haute.

7. Four selon la revendication 6, **caractérisé en ce que** l'ouverture de sortie (13) des fumées présente une forme allongée rectangulaire dont la grande dimension est orientée suivant la largeur du four.

8. Four selon l'une quelconque des revendications précédentes, **caractérisé en ce qu'**il comporte un moyen de dopage (15) des fumées dans la zone de récupération (9) pour augmenter l'émittance des fumées, par ensemencement à l'aide de particules appropriées, en particulier poudre de calcin ou de matières à vitrifier.

9. Four selon la revendication 8, **caractérisé en ce que** le moyen de dopage (15) comprend des moyens d'injection (16) des particules depuis la voûte (12) de la zone de récupération.

10. Four selon la revendication 1, **caractérisé en ce que** des moyens d'injection (17) sont prévus pour assurer la formation d'un rideau (17a) de particules contre le rayonnement au débouché de la zone de récupération (9) dans la zone de combustion (5).

11. Procédé comprenant une étape de fusion de matière à vitrifier d'émissivité ε$_{batch}$ moyenne par un four de fusion de matières à vitrifier dont l'équipement de chauffage est au moins partiellement à oxy-combustion comprenant :

- une zone de combustion (5) munie de moyens de chauffage constitués par des brûleurs (6), de sorte que la cuve (3) contient un bain (7) de matières en fusion lorsque le four est en fonctionnement, la combustion du four, en particulier l'oxy-combustion générant des fumées à haute température, la combustion présentant un débit spécifique de fumée sFlow,
- au moins une entrée (8) prévue en amont du four pour l'enfournement des matières à vitrifier (2),

le procédé comprenant également une étape de récupération des fumées par au moins une zone de récupération (9), entre l'entrée (8) et la zone de com-

bustion (5), recouvrant au moins une partie du tapis de matières premières flottant sur le bain en fusion, la majorité des fumées d'oxy-combustion circulant dans la ou les zones de récupération, la zone de récupération comportant au moins une ouverture (13) d'évacuation des fumées prévue en amont de chaque zone de récupération, **caractérisé en ce que** :

- la hauteur moyenne optimisée (Hopt) sur l'ensemble de la zone de récupération de chaque zone de récupération est telle que l'on favorise le rayonnement vertical des fumées vers la surface du tapis au détriment du rayonnement horizontal parallèle à la surface du tapis,
- la hauteur (Hopt) exprimée en mètres de la partie centrale de la voûte (12) dans la zone de récupération au-dessus de la matière à chauffer satisfait à la relation suivante :

$$H_{opt}=0.6^{1-\varepsilon_{batch}} \cdot N_{recu} \cdot sFlow_{flue}^{0.5}$$

dans laquelle la hauteur moyenne optimisée Hopt est exprimée en mètre en fonction de l'émissivité moyenne du tapis ebatch dans la zone de récupération, d'un nombre Nrecu correspondant à une constante sans dimension et du débit spécifique de fumées sFlow<sub>flue</sub> exprimé en kg/sec par m² de surface de la zone de récupération, le nombre Nrecu étant égal à 2.

12. Procédé de construction d'une voûte de zone de récupération de four de hauteur moyenne H<sub>opt</sub> sur l'ensemble de la surface de la zone de récupération, pour un four de fusion de matières à vitrifier à partir de l'émissivité ε<sub>batch</sub> moyenne d'un tapis de matière à vitrifier, et du débit spécifique de fumée sFlow, le four de fusion de matières à vitrifier dont l'équipement de chauffage est au moins partiellement à oxy-combustion comprenant :

- une zone de combustion (5) munie de moyens de chauffage constitués par des brûleurs (6), de sorte que la cuve (3) contient un bain (7) de matières en fusion lorsque le four est en fonctionnement, la combustion du four, en particulier l'oxy-combustion générant des fumées à haute température, la combustion présentant un débit spécifique de fumée sFlow,
- au moins une entrée (8) prévue en amont du four pour l'enfournement des matières à vitrifier (2),
- au moins une zone de récupération (9), entre l'entrée (8) et la zone de combustion (5), recouvrant au moins une partie du tapis de matières premières flottant sur le bain en fusion,

la majorité des fumées d'oxy-combustion circulant dans la ou les zones de récupération,

- au moins une ouverture (13) d'évacuation des fumées prévue en amont de chaque zone de récupération,

**caractérisé en ce que** :

- la hauteur moyenne optimisée (Hopt) sur l'ensemble de la zone de récupération de chaque zone de récupération est telle que l'on favorise le rayonnement vertical des fumées vers la surface du tapis au détriment du rayonnement horizontal parallèle à la surface du tapis,
- la hauteur (Hopt) exprimée en mètres de la partie centrale de la voûte (12) dans la zone de récupération au-dessus de la matière à chauffer satisfait à la relation suivante :

$$H_{opt}=0.6^{1-\varepsilon_{batch}} \cdot N_{recu} \cdot sFlow_{flue}^{0.5}$$

dans laquelle la hauteur moyenne optimisée Hopt est exprimée en mètre en fonction de l'émissivité moyenne du tapis ebatch dans la zone de récupération, d'un nombre Nrecu correspondant à une constante sans dimension et du débit spécifique de fumées sFlow<sub>flue</sub> exprimé en kg/sec par m² de surface de la zone de récupération, le nombre Nrecu étant égal à 2.

**Patentansprüche**

1. Schmelzofen für zu sinterndes Material, dessen Heizanlage zumindest teilweise mit Sauerstoffverbrennung arbeitet, mit:

- einer Verbrennungszone (5), die derart mit durch Brenner (6) gebildeten Heizeinrichtungen versehen ist, dass die Wanne (3) im Betrieb des Ofens ein Bad (7) aus geschmolzenen Materialien enthält, wobei die Verbrennung des Ofens, insbesondere die Sauerstoffverbrennung, Rauchgas mit hoher Temperatur mit einem Durchsatz Flow<sub>flue</sub> erzeugt,
- mindestens einem stromaufwärts des Ofens vorgesehenen Einlass (8) zum Beschicken mit zu sinternden Materialien (2),
- mindestens einer zwischen dem Einlass (8) und der Verbrennungszone (5) vorgesehenen Rückgewinnungszone (9), welche mindestens einen Teil des auf dem Schmelzbad schwimmenden Rohstoffteppichs rückgewinnt,

wobei der Hauptteil des Sauerstoffverbrennungsrauchgases in der oder in den Rückgewinnungszonen zirkuliert,

- mindestens einer Rauchgasabzugsöffnung (13), die stromaufwärts jeder Rückgewinnungszone vorgesehen ist,

**dadurch gekennzeichnet, dass**:

- die optimierte mittlere Höhe ($H_{opt}$) jeder Rückgewinnungszone derart gewählt ist, dass die vertikale Abstrahlung der Rauchgase in Richtung der Oberfläche des Teppichs zu Ungunsten der horizontalen Abstrahlung parallel zur Oberfläche des Teppichs begünstigt wird,
- das die Rückgewinnungszone überspannende Gewölbe (12) eine Innenfläche (12a) aufweist, die niedriger ist als der untere Rand (11a) des Giebels (11) an der Mündung der Rückgewinnungszone (9) in die Verbrennungszone (5), und die Innenfläche (12a) der Rückgewinnungszone in Längsrichtung des Ofens sich von Verbrennungszone (5) zumindest bis zur Rauchgasabzugsöffnung (13) fortsetzt.

2. Ofen nach Anspruch 1, **dadurch gekennzeichnet, dass** das Gewölbe (12) in der Rückgewinnungszone (9) flach ist und aus feuerfesten Blöcken (18) besteht, die an einer Tragstruktur (19) angebracht sind.

3. Schmelzofen für zu sinterndes Material nach einem der vorhergehenden Ansprüche, mit:

- einer Wanne (3), die von einem Gewölbe überdeckt ist,
- einer Verbrennungszone (5), die mit Heizeinrichtungen, insbesondere Brennern (6) versehen ist,
- mindestens einem stromaufwärts des Ofens angeordneten Einlass (8) zum Beschicken mit zu erhitzenden Materialien,
- mindestens einem stromabwärtigen Auslass für die erwärmten oder geschmolzenen Materialien,

wobei die Wanne im Betrieb des Ofens ein Bad (7) aus geschmolzenen Materialien enthält, wobei die eingebrachten zu sinternden Materialien einen Teppich (G) bilden, der auf dem Bad schwimmt und fortschreitend schmilzt.
**dadurch gekennzeichnet, dass** er nahe dem Beschickungseinlass (8), stromaufwärts oder stromabwärts des Einlasses, oder an diesem Einlass, eine Einrichtung (21) zur starken Erwärmung aufweist, um eine Oberflächenschicht der eingebrachten Materialien zu schmelzen und das Emissionsvermögen des Teppichs aus zu sinternden Materialien zu erhöhen.

4. Ofen nach Anspruch 3, **dadurch gekennzeichnet, dass** die Einrichtung (21) zur starken Erwärmung durch einen Vorhang von Flammen gebildet ist, die von einer sich über die gesamte Breite des Ofens über dem Teppich der zu sinternden Materialien erstreckenden Brennerrampe (22) aus nach unten gerichtet sind.

5. Ofen nach Anspruch 3, **dadurch gekennzeichnet, dass** die Einrichtung (21) zur starken Erwärmung durch elektromagnetische Strahlung gebildet ist, die sich über die gesamte Breite des Ofens über dem Teppich der zu sinternden Materialien erstreckt.

6. Ofen nach einem der vorhergehenden Ansprüche, **dadurch gekennzeichnet, dass** die Rauchgasauslassöffnung (13) sich über die gesamte Breite des Ofens an dessen stromaufwärtigen Ende im oberen Teil erstreckt.

7. Ofen nach Anspruch 6, **dadurch gekennzeichnet, dass** die Rauchgasauslassöffnung (13) eine längliche rechteckige Form aufweist, deren große Abmessung entlang der Breite des Ofens ausgerichtet ist.

8. Ofen nach einem der vorhergehenden Ansprüche, **dadurch gekennzeichnet, dass** er in der Rückgewinnungszone (9) eine Einrichtung (15) aufweist, welche zum Dotieren der Rauchgase durch Impfen mit geeigneten Partikeln, insbesondere einem Pulver aus Glasbruch oder zu sinternden Materialien, dient, um die Ausstrahlung aus den Rauchgasen zu verstärken.

9. Ofen nach Anspruch 8, **dadurch gekennzeichnet, dass** die Dotierungseinrichtung (15) Einrichtungen (16) zum Einspritzen von Partikeln von dem Gewölbe (12) der Rückgewinnungszone her aufweist.

10. Ofen nach Anspruch 1, **dadurch gekennzeichnet, dass** die Einspritzeinrichtungen (17) vorgesehen sind, um die Bildung eines Partikelvorhangs (17a) gegen die Abstrahlung an der Mündung der Rückgewinnungszone (9) in die Verbrennungszone (5) sicherzustellen.

11. Verfahren mit einem Schritt des Schmelzens von zu sinterndem Material mit einem mittleren Emissionsvermögen $\varepsilon_{batch}$ mittels eines Ofens zum Schmelzen von zu sinterndem Material, dessen Heizanlage zumindest teilweise mit Sauerstoffverbrennung arbeitet, mit:

- einer Verbrennungszone (5), die derart mit durch Brenner (6) gebildeten Heizeinrichtungen versehen ist, dass die Wanne (3) im Betrieb des Ofens ein Bad (7) aus geschmolzenen Materialien enthält, wobei die Verbrennung des Ofens, insbesondere die Sauerstoffverbrennung, Rauchgas mit hoher Temperatur erzeugt, wobei die Verbrennung einen spezifischen Rauchgasdurchsatz sFlow aufweist,
- mindestens einem stromaufwärts des Ofens vorgesehenen Einlass (8) zum Beschicken mit zu sinternden Materialien (2),

wobei das Verfahren ferner einen Schritt der Rauchgasrückgewinnung mittels mindestens einer zwischen dem Einlass (8) und der Verbrennungszone (5) vorgesehenen Rückgewinnungszone (9) aufweist, welche mindestens einen Teil des auf dem Schmelzbad schwimmenden Rohstoffteppichs rückgewinnt,
wobei der Hauptteil der Sauerstoffverbrennungsrauchgase in der oder in den Rückgewinnungszonen zirkuliert,
wobei die Rückgewinnungszone mindestens eine Rauchgasabzugsöffnung (13) aufweist, die stromaufwärts jeder Rückgewinnungszone vorgesehen ist,
**dadurch gekennzeichnet, dass**:

- die optimierte mittlere Höhe ($H_{opt}$) über die gesamte Rückgewinnungszone jeder Rückgewinnungszone derart gewählt ist, dass die vertikale Abstrahlung des Rauchgases in Richtung der Oberfläche des Teppichs zu Ungunsten der horizontalen Abstrahlung parallel zur Oberfläche des Teppichs begünstigt wird,
- die in Metern ausgedrückte optimierte Höhe ($H_{opt}$) des mittleren Teils des Gewölbes (12) in der Rückgewinnungszone über dem zu erhitzenden Material die folgende Gleichung erfüllt:

$$H_{opt} = 0.6^{1-\varepsilon_{batch}} \cdot N_{recu} \cdot sFlow_{flue}^{0.5}$$

wobei die optimierte mittlere Höhe $H_{opt}$ in Metern ausgedrückt wird und zwar in Abhängigkeit von dem mittleren Emissionsvermögen des Teppichs $\varepsilon_{batch}$ in der Rückgewinnungszone, einer Zahl Nrecu, welche einer Konstante ohne Dimension entspricht, und dem spezifischen Rauchgasdurchsatz $sFlow_{flue}$, der in kg/sec pro $m^2$ der Fläche der Rückgewinnungszone ausgedrückt wird, wobei die Zahl Nrecu gleich 2 ist.

12. Verfahren zur Herstellung eines Gewölbes einer Ofen-Rückgewinnungszone mit einer mittleren Höhe $H_{opt}$ über die gesamte Fläche der Rückgewinnungszone, für einen Ofen zum Schmelzen von zu sinterndem Material ausgehend von dem mittleren Emissionsvermögen $\varepsilon_{batch}$ eines Teppichs aus zu sinterndem Material und von dem spezifischen Rauchgasdurchsatz sFlow, wobei der Ofen zum Schmelzen von zu sinterndem Material, dessen Heizanlage zumindest teilweise mit Sauerstoffverbrennung arbeitet, aufweist:

- eine Verbrennungszone (5), die derart mit durch Brenner (6) gebildeten Heizeinrichtungen versehen ist, dass die Wanne (3) im Betrieb des Ofens ein Bad (7) aus geschmolzenen Materialien enthält, wobei die Verbrennung des Ofens, insbesondere die Sauerstoffverbrennung, Rauchgas mit hoher Temperatur erzeugt, wobei die Verbrennung einen spezifischen Rauchgasdurchsatz sFlow aufweist,
- mindestens einen stromaufwärts des Ofens vorgesehenen Einlass (8) zum Beschicken mit zu sinternden Materialien (2),
- mindestens eine zwischen dem Einlass (8) und der Verbrennungszone (5) vorgesehene Rückgewinnungszone (9), welche mindestens einen Teil des auf dem Schmelzbad schwimmenden Rohstoffteppichs rückgewinnt,
wobei der Hauptteil der Sauerstoffverbrennungsrauchgase in der oder in den Rückgewinnungszonen zirkuliert,
- mindestens eine Rauchgasabzugsöffnung (13), die stromaufwärts jeder Rückgewinnungszone vorgesehen ist,

**dadurch gekennzeichnet, dass**:

- die optimierte mittlere Höhe ($H_{opt}$) über die gesamte Rückgewinnungszone jeder Rückgewinnungszone derart gewählt ist, dass die vertikale Abstrahlung der Rauchgase in Richtung der Oberfläche des Teppichs zu Ungunsten der horizontalen Abstrahlung parallel zur Oberfläche des Teppichs begünstigt wird,
- die in Metern ausgedrückte optimierte Höhe ($H_{opt}$) des mittleren Teils des Gewölbes (12) in der Rückgewinnungszone über dem zu erhitzenden Material die folgende Gleichung erfüllt:

$$H_{opt} = 0.6^{1-\varepsilon_{batch}} \cdot N_{recu} \cdot sFlow_{flue}^{0.5}$$

wobei die optimierte mittlere Höhe $H_{opt}$ in Metern ausgedrückt wird und zwar in Abhängigkeit von dem mittleren Emissionsvermögen des Teppichs $\varepsilon_{batch}$ in der Rückgewinnungszone, einer Zahl Nrecu, welche einer Konstante ohne Dimension entspricht, und dem spezifischen Rauchgasdurchsatz $sFlow_{flue}$, der in kg/sec pro $m^2$ der Fläche der Rückgewinnungszone ausgedrückt wird, wobei die Zahl Nrecu gleich 2 ist.

**Claims**

1. Furnace for melting batch raw materials, the heating equipment of which at least partly involves oxy-fuel combustion, comprising:

   - a combustion zone (5) provided with heating means, consisting of burners (6), so that the tank (3) contains a melt (7) of melted materials when the furnace is operating, the furnace combustion, in particular the oxy-fuel combustion generating high temperature flue gas with a flow rate $Flow_{flue}$,
   - at least one inlet (8) located upstream of the furnace, for charging it with the materials (2) to be heated,
   - at least one recuperation zone (9), between the inlet (8) and the combustion zone (5), covering at least part of the batch blanket floating on the melt, most of the oxy-fuel combustion flue gas circulating in the recuperation zone or zones; and
   - at least one flue gas discharge opening (13) provided upstream of each recuperation zone, **characterized in that**:
   - the optimized average height (Hopt) of each recuperation zone is such that vertical radiation from the flue gas towards the surface of the blanket is promoted to the detriment of horizontal radiation parallel to the surface of the blanket; and
   - the crown (12) lying above the recuperation zone has an inner surface (12a) which is lower than, the lower edge (11a) of the gable wall (11) at the opening of the recuperation zone (9) into the combustion zone (5), and the inner surface (12a) of the recuperation zone is continuous, along the longitudinal direction of the furnace, from the combustion zone (5) at least as far as the flue gas discharge opening (13).

2. Furnace according to claim 1, **characterized in that**, in the recuperation zone (9), the crown (12) is flat and made up of refractory blocks (18) attached to a supporting structure (19).

3. Furnace for melting batch raw materials, according to any one of the preceding claims, comprising:

   - a tank (3) covered by a crown;
   - a combustion zone (5) provided with heating means, especially with burners (6);
   - at least one inlet (8) located upstream of the furnace, for charging it with the materials to be heated; and
   - at least one downstream outlet for the heated or melted materials,

the tank containing a melt (7) when the furnace is operating and the batch raw materials introduced forming a batch blanket (G) that floats on the melt and is progressively melted, **characterized in that** it includes, near the charging inlet (8), upstream or downstream of the inlet or at this inlet, an intense heating means (21) for melting a surface layer of the materials introduced and for increasing the emissivity of the batch blanket.

4. Furnace according to Claim 3, **characterized in that** the intense heating means (21) is formed by a curtain of flames directed downwards from a rail of burners (22) extending over the entire width of the furnace, above the batch blanket.

5. Furnace according to Claim 3, **characterized in that** the intense heating means (21) is formed by electromagnetic radiation extending over the entire width of the furnace, above the batch blanket.

6. Furnace according to any one of the preceding claims, **characterized in that** the flue gas discharge opening (13) extends over the entire width of the furnace at its upstream end, in the upper part.

7. Furnace according to Claim 6, **characterized in that** the flue gas discharge opening (13) is of rectangular elongate shape, the long side of which lies along the width of the furnace.

8. Furnace according to any one of the preceding claims, **characterized in that** it includes a flue gas doping means (15) in the recuperation zone (9) in order to increase the emittance of the flue gas, by seeding it with suitable particles, particularly with powdered cullet or batch.

9. Furnace according to Claim 8, **characterized in that** the doping means (15) comprises means (16) for injecting the particles from the crown (12) of the recuperation zone.

10. Furnace according to Claim 1, **characterized in that** injection means (17) are provided for forming a curtain (17a) of particles blocking the radiation at the opening of the recuperation zone (9) into the combustion zone (5).

11. Process comprising a step of melting batch raw materials of an average emissivity $\varepsilon_{batch}$ by a furnace for melting batch raw materials, the heating equipment of which at least partly involves oxy-fuel combustion, comprising:

    - a combustion zone (5) provided with heating means, consisting of burners (6), so that the tank (3) contains a melt (7) of melted materials when the furnace is operating, the furnace combustion, in particular the oxy-fuel combustion generating high temperature flue gas specific flue, the combustion showing a specific flue gas flow rate sFlow,
- at least one inlet (8) located upstream of the furnace, for charging it with the materials (2) to be heated,

the process also comprising a step of recuperating flue by at least a recuperation zone (9), between the entrance (8) and the combustion zone (5), covering at least part of the batch blanket floating on the melt, most of the oxy-fuel combustion flue gas circulating in the recuperation zone or zones;
the recuperation zone comprising at least one flue gas discharge opening (13) provided upstream of each recuperation zone, **characterized in that**:

- the optimized average height ($H_{opt}$) of the whole recuperation zone of each recuperation zone is such that vertical radiation from the flue gas towards the surface of the blanket is promoted to the detriment of horizontal radiation parallel to the surface of the blanket; and
- the height ($H_{opt}$) expressed in metres of the central part of the crown (12) in the recuperation zone above the material to be heated satisfies the following equation:

$$H_{opt} = 0.6^{1-\varepsilon_{batch}} \cdot N_{recu} \cdot sFlow_{flue}^{0.5}$$

in which the optimized average height $H_{opt}$ is expressed in metres as a function of the average emissivity $\varepsilon_{batch}$ of the batch blanket in the recuperation zone, of a number $N_{recu}$ corresponding to a dimensionless constant and of the specific flue gas flow rate $sFlow_{flue}$ expressed in kg/s per m$^2$ of area in the recuperation zone, the number $N_{recu}$ being equal to 2.

12. Process of making a crown of a recuperating zone of average height (Hopt) of the recuperation zone for a furnace for melting batch raw materials, given an average emissivity $\varepsilon_{batch}$ of a batch blanket and a specific flue gas flow rate SFlow, the heating equipment of which at least partly involves oxy-fuel combustion, comprising:

- a combustion zone (5) provided with heating means, consisting of burners (6), so that the tank (3) contains a melt (7) of melted materials when the furnace is operating, the furnace combustion, in particular the oxy-fuel combustion generating high temperature flue gas specific flue, the combustion showing a specific flue gas flow rate sFlow,
- at least one inlet (8) located upstream of the furnace, for charging it with the materials (2) to be heated,
- at least a recuperation zone (9), between the entrance (8) and the combustion zone (5), covering at least part of the batch blanket floating on the melt, most of the oxy-fuel combustion flue gas circulating in the recuperation zone or zones;
- at least one flue gas discharge opening (13) provided upstream of each recuperation zone,

**characterized in that**:

- the optimized average height ($H_{opt}$) of the recuperation zone of each recuperation zone is such that vertical radiation from the flue gas towards the surface of the blanket is promoted to the detriment of horizontal radiation parallel to the surface of the blanket; and
- the height ($H_{opt}$) expressed in metres of the central part of the crown (12) in the recuperation zone above the material to be heated satisfies the following equation:

$$H_{opt} = 0.6^{1-\varepsilon_{batch}} \cdot N_{recu} \cdot sFlow_{flue}^{0.5}$$

in which the optimized average height $H_{opt}$ is expressed in metres as a function of the average emissivity $\varepsilon_{batch}$ of the batch blanket in the recuperation zone, of a number $N_{recu}$ corresponding to a dimensionless constant and of the specific flue gas flow rate $sFlow_{flue}$ expressed in kg/s per m$^2$ of area in the recuperation zone, the number $N_{recu}$ being equal to 2.

FIG.1

EP 2 462 066 B1

FIG.2

FIG.3

Fumées

Tapis

$Tf_{in}$

$T_{fumées}$

$T_{surface\ tapis}$

$\Delta T_{fumées}$

$\Delta T_{fumées-tapis}$

$Tf_{out}$

X

FIG.4

FIG.5

FIG.6

**EP 2 462 066 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 1256831
- FR 2711981
- US 5536291 A